# EUROPEAN PATENT SPECIFICATION

(11) **EP 3 675 336 B1**
(45) Date of publication and mention of the grant of the patent: **03.04.2024**
(21) Application number: 18425111.4
(22) Date of filing: 31.12.2018
(51) Int. Cl.: H02K 15/00

(54) **DEVICE AND METHOD FOR SURFACE INSPECTION OF A WEDGE FOR FIXING A BAR OF A GENERATOR**
VORRICHTUNG UND VERFAHREN ZUR OBERFLÄCHENINSPEKTION EINES KEILS ZUR BEFESTIGUNG EINES LEITERSTABS EINES GENERATORS
DISPOSITIF ET PROCÉDÉ D'INSPECTION DE SURFACE D'UNE CALE POUR FIXER UNE BARRE D'UN GÉNÉRATEUR

(43) Date of publication of application: 01.07.2020
(73) Proprietor: ANSALDO ENERGIA S.p.A., 16152 Genova (IT)
(72) Inventor: Pignone, Enrico, 16152 Genova (IT); Martorana, Gianfranco, 16152 Genova (IT); D'Agostino, Fabrizio, 16152 Genova (IT)
(74) Representative: Studio Torta S.p.A.

(56) References cited:
- EP-A2- 0 553 968
- US-A- 4 901 572

## Description

### Field of the Invention

The present invention relates to the technical field of the generators. In particular, the present invention relates to the field of the service for generators, i.e. the periodic inspection activities carried out in order to check the integrity of the components forming the generators. More in detail, the service activity related to the present invention refers to a generator with a device for carrying out a surface inspection of a surface. The scope of this surface inspection could be to measure a surface deflection, i.e. measuring a surface curve deformation starting from a flat or straight configuration. However, the scope of the surface inspection could be also to measure a simply flat surface inclination starting from an original straight configuration. According to the invention, the surface to be checked is an outer wedge surface, wherein the wedge is a particular component used for fixing a stator bar in a generator.

Therefore, the present invention refers to a method for performing this surface inspection as service activity and to a generator with an inspecting device.

In the following, the above mentioned generator will be described as a turbo-generator, i.e. a generator of a gas turbine assembly, because in this kind of machine the service activity is very important and it has to be often performed. However, the present invention can be applied also in other kind of generators, i.e. a generator of a steam turbine assembly or, in general, in any generator comprising a convex/concave wedge fixing a stator bar.

In other words, the described implementation of the present invention in the field of the gas turbine assemblies does not limit the scope of protection of the invention itself.

### Description of prior art

Usually, in a generator the rotating part is in form of an inner rotor and the statoric part (or stator) is a fixed structure arranged outside around the rotor. An airgap is present between the inner rotating rotor and the outer statoric part of the generator. Therefore, the statoric part is shaped as a hollow cylindrical body wherein the inner cylindrical surface is facing the rotating rotor. This inner surface is provided with a plurality of axial grooves wherein each groove defines a recessed seat for a stator bar with relative electric windings. In order to avoid vibrations of the bars, each bar is "locked" into the relative groove by a system of insulating wedges.

Today are known different types of insulating wedges. In particular, and as a non-limiting example, the system of insulating wedges may comprise two wedges for each bar, i.e. a lower wedge facing the bar and an upper wedge facing the airgap and the rotor. The upper surface of the inner wedge is in contact with the inner surface of the upper wedge. In order to lock the relative bar, the lower wedge applies a pressure on the bar. As a reaction, the same pressure is applied by the lower wedge to the upper wedge. Since the upper wedge is constrained for its entire length in the groove at both lateral edges, due to the aforementioned pressure the upper surface of the upper wedge deforms from a starting flat condition and presents a curved deformation shape. In view of this deformation, this kind of fixing wedge is known as "convex/concave wedge". The entity of this deformation depends on the amount of the pressure that is transferred from the lower wedge to the bar. In view of the above, it is possible to verify if the correct pressure is applied to the bar by measuring the deflection of the upper surface of the upper wedge. This is the reason way it is important to perform service periodical measurements of the deflection of the upper surface of the upper wedge. Always according to the prior art it possible to use another kind of wedges wherein these wedges disclose a flat outer surface also during the generator operation. Also for this kind of wedge it is important to perform a periodical outer surface inspection in order to measure an eventual flat surface inclination starting from an original straight configuration. A flat surface inclination may be a warning signal of a presence of clearance between the wedge and the relative seat.

According to the prior art practice, the wedge surface inspection, in particular the measurement of the deflection of the insulating wedges, is carried out by using "contact" inspecting devices, i.e. sensors that require a direct contact between the sensor itself and the wedge surface to be inspected. This prior art practice involves some drawbacks. A minor drawback refers to the calibration of the device. Indeed, the measurement is calculated as a difference between a reference flat surface and the measured curved surface. However, the main drawback of this kind of devices, where the contact between the sensor and the surface to be measured is needed, is the fact that these devices are not suitable for operating in the airgap when the rotor is present due to the dimensions of the contact sensor itself. In other words, the contact sensors are too big to be used when the rotor is present in the generator.

Therefore, before starting with this servicing procedure today it is necessary to remove the rotor from the generator statoric part. In view of the above, this procedure needs a long servicing time.

As an application example, the generator rotor may be a gas turbine rotor of gas turbine assembly for power plants. As known, a gas turbine assembly for power plants (in the following only gas turbine) comprises a rotor provided with an upstream compressor unit, at least a combustor unit and at least a downstream turbine unit. The terms downstream and upstream refer to the direction of the main gas flow passing through the gas turbine. In particular, the compressor is configured for compressing air supplied at a compressor inlet. The compressed air leaving the compressor flows into a plenum and from there into the combustor unit. The combustor unit comprises one or more burners wherein the compressed air is mixed with at least one fuel. The mixture of fuel and compressed air flows into one or more combustion chambers where this mixture are combusted. The resulting hot gas leaves the combustor unit and it expands in the turbine unit performing a rotating work on the rotor. This rotating work applied to the rotor is then used in an alternator or generator for producing electric energy arranged downstream the turbine unit.

US4901572 discloses a wedge measuring apparatus according to the preamble of claim 1 comprising a measuring head, capable of being inserted between a stator and a rotor of a revolving electric machine, for testing a coil-urging state of wedges inserted in a slot.

EP0553968 discloses an apparatus and a method for measuring the tightness of stator wedges in the stator without removing the rotor.

### Disclosure of the invention

An object of the present invention is to provide a generator with an inspection device and a method for carrying out a surface inspection, for instance for measuring the surface deflection (i.e. the curved deformation compared to a straight configuration), wherein the inspected surface is the outer surface of a wedge used for fixing a stator bar in the generator. As it will be clear in the following, the innovative method and device are suitable for overcoming the problems foregoing described of the prior art practice.

In particular, the general scope of the present invention is to realize a wedge surface inspection, preferably a concave/convex wedge deflection measure by using a device having a size suitable for being operated when the rotor is still arranged inside the generator, i.e. without requesting a preliminary disassembly of the rotor.

In order to achieve the objective mentioned above, the present invention provides a generator with an inspecting device according to claim 1 for carrying out a surface wedge inspection of a wedge for fixing a stator bar of a generator; preferably a measuring device for measuring the deflection of a concave/convex wedge for fixing a stator bar of a generator. According to the main aspect of the invention, this surface wedge inspecting device comprises:
- a vehicle having a size suitable for being inserted in the generator air gap in presence of the rotor and for axially running along the rotor axis on the statoric inner surface facing at least the wedge surface to be inspected; the vehicle being provided with a sensor device configured for inspecting the wedge surface without requiring the rotor extraction .

Preferably, the sensor device is configured for measuring the wedge surface deflection, weherein with the terms "measuring the wedge surface deflection" we mean the possibility to have information about the inclination, shape or geometry of the wedge surface that originally has a flat shape.

With the term "vehicle", we mean an assembly comprising a frame suitable for supporting the sensor device and wheels or tracks (or any equivalent component) suitable for allowing the movement of the device on the inner surface of the generator statoric part along the generator axis facing the wedge surface to be inspected. Of course, the device of the present invention may comprise a control unit configured for elaborating the signal received by the sensor device, for activating the sensor device itself and for controlling the movement of the vehicle.

Preferably, the coupling between the device and the statoric inner surface is performed in a magnetic manner so that the adhesion of the inspecting device is guarantee independently on the circumferential position of the device around the axis.

According to an embodiment, the frame may comprises a first portion arranged on a first axial groove and a second portion in a cantilever condition above the adjacent groove. In this configuration, the first portion of the frame is provided with wheels or tracks suitable for allowing the movement of the device whereas the second portion of the frame is provided with the sensor device for inspecting the wedge arranged in the adjacent groove. Advantageously, according to this embodiment it is possible to moreover reduce the radial high of the frame.

According to the invention, the inspection measurement is obtained through a contactless sensor, i.e. an optical system.

Advantageously, according to the invention by using a contactless sensor device it is possible to reduce the size of the inspecting device so that it can be arranged inside the generator with rotor in place. Accordingly, the installation and removal of the device before and after the service wedge inspection activity are simple and fast. Due to the reduced dimensions, also the transportation of the inspecting device is easy.

The contactless sensor device supported by the vehicle comprises:
- a laser emitter configured for projecting an angled laser beam with respect to the wedge surface to be measured;
- an image sensing source configured for receiving the laser beam reflected from the wedge surface to be measured;
- a mirror (optionally) suitable for reflecting and directing the angled laser beam against the wedge surface to be measured.

By using this kind of contactless sensor device the measurement is accurate and rapid.

According to an embodiment of the invention, the laser emitter beam may be realized with a faro arm or a line beam at least some matching points on the wedge surface to be measured and some reference points in the stator groove, i.e. in the vertical walls limiting the groove.

Advantageously, the laser emitter can be arranged with a high angle with respect to the concave/convex wedge surface to be measured. This almost parallel disposition of the laser emitter with respect to the wedge surface allows to further reduce the radial size of the inspecting device.

The mirror above mentioned is orientable, i.e. can be tilted with respect to the laser emitter and to the surface to be measured. Advantageously, the same device can be used in different generators independently from the distance between the inspecting device and the recessed wedge surface to be measured. However, as foregoing mentioned, the mirror is optionally present in the device. If the device does not comprise the mirror the laser emitter itself can be tiltable.

According to the invention, the laser emitter is configured for emitting a laser beam having an opening angle β (i.e. an angle along the circumferential direction) so that it illuminates not only the recessed wedge surface but also at least a portion of the lateral walls of the groove housing the wedge.

Advantageously, according to the above feature the measurement is guarantee also in case of misalignment of the device with respect to the center of the wedge.

Alternatively, not being part of the invention the laser emitter is configured for emitting not an angled laser beam but just a plurality of laser pointer beams. For instance, the laser emitter can comprise a single source coupled with a plurality (preferably three) of optical fibers. Of course, the image sensing source is suitable for detecting either the angled laser beam and the laser pointer beams.

According to an embodiment, the device can also be provided with a second laser emitter configured for emitting a laser beam along the axial generator direction for generating a guide reference for the axial movement of the device. The laser used for this purpose may be different (color or pulsation) from the laser used for inspecting the wedge surface. Advantageously, the image sensing source can use this guiding beam for correcting eventual misalignment of the advancing device with respect to axial direction.

The present invention also refers to a method according to claim 9 for carrying out a wedge surface inspection, preferably for measuring a wedge surface deflection, wherein this method comprises the steps of:
a) providing a generator having an airgap between an outer statoric and an inner rotating part, wherein the rotating part may be for instance a gas turbine rotor;
b) providing an inspection device as foregoing described;
c) inserting the device in the generator airgap on the inner surface of the statoric part so that the device is facing the wedge surface to be measured;
d) moving the device along the axis generator;
e) inspecting the wedge surface, preferably measuring the wedge surface deflection, by means of the contactless sensor during the movement of the device.

Since preferably, as foregoing described, the contactless sensor device comprises a laser emitter, an image sensing source and an orientable mirror (optionally) configured for reflecting and directing the angled laser beam against the wedge surface to be measured. The method may comprise also the step of tilting the mirror and/or the laser emitter depending on the geometry of the groove housing the wedge.

Advantageously, according to the above embodiment it is possible to guarantee the fact that the image sensing source can always receive the laser beam reflected by the wedge surface.

Moreover, the inspection method according to the present invention may comprise a preliminary step of providing the device control unit with the original shape information of the wedge to be inspected. This information is useful for evaluating the deviation from the original surface configuration. Moreover, depending on this information also the laser emitter device can be controlled in a different manner. For instance, in case of a flat wedge the laser emitter can be controlled for emitting some laser pointer beams whereas in case of a convex wedge the laser emitter can be controlled for emitting a wide angled laser beam. It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine assembly for power plants;
- figure 2 is a schematic view of a statoric part of a generator;
- figure 3 is an enlarged schematic view of the portion of statoric part the labeled as III in figure 2;
- figure 4 is a schematic view disclosing an embodiment of the inspecting device of the present invention arranged on the generator statoric part of figure 3;
- figure 5 is a schematic view disclosing the contactless sensors arranged inside the inspecting device of figure 4;
- figures 6 and 7 are respectively a prospective and an elevated schematic view of the groove housing the wedge disclosing how the angled laser beam impacts against the surface to be inspected and the lateral walls of the groove (the inspecting device has been removed for sake of clarity) .

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

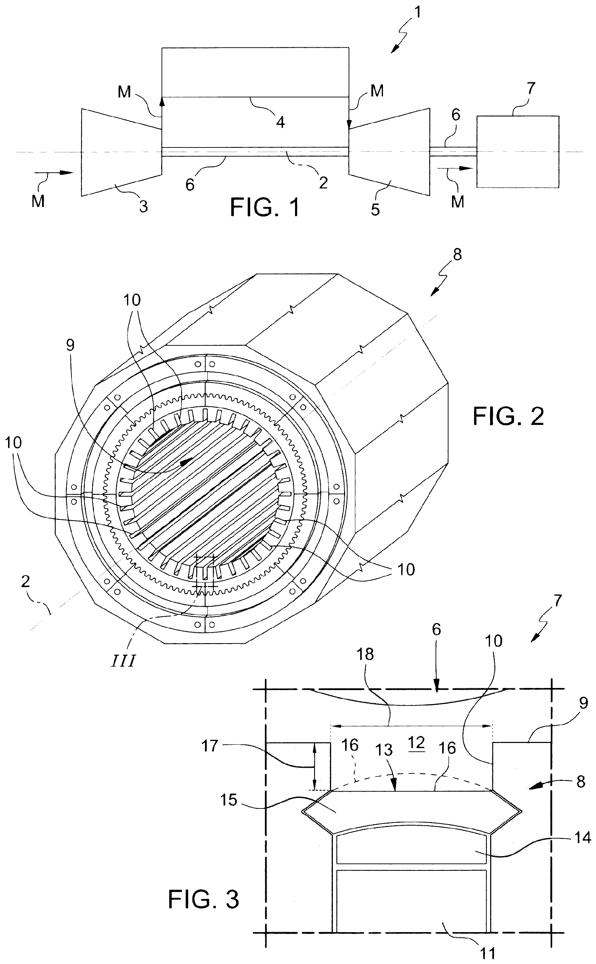

Reference is made to figure 1 which is a schematic view of a gas turbine assembly for power plants (in the following only gas turbine). Indeed, a gas turbine generator field is a non-limiting example of the application of the present invention. Figure 1 discloses a gas turbine 1 having a rotor 6 defining an axis 2 and comprising in series along the main flow M:
- a compressor unit 3,
- a combustor unit 4 wherein the compressed air is mixed with at least a fuel and this mixture is combusted to create a hot gas flow,
- a turbine unit 5 where the hot gas flow expands performing rotating work on the rotor 6.

As known, the combustor unit can be provided with a single annular combustor or a plurality of can combustors. The exhaust gases leaving the turbine can be used, for instance, in a steam generator. According to figure 1, downstream the turbine 5 the rotor 6 works as a rotating part in a generator/alternator 7.

Reference is now made to figures 2 that is a schematic view of the statoric part 8 or stator of the generator 7. In particular, figure 2 discloses a statoric part 8 in form of a hollow cylindrical structure along the axis 2 suitable for housing the rotor 6 (not shown in figure 2). As above described, the rotor may be the gas turbine rotor 6 of figure 1 and therefore the generator axis may be aligned or not with respect to gas turbine axis and the generator rotor may be integral or not with the gas turbine rotor passing the compressor 3 and the turbine 5. Statoric part 8 of the generator 7 comprises an inner surface 9 facing the rotor 6 and wherein an airgap is provided between the rotor 6 and this inner surface 9. As disclosed in figure 2, the inner surface 9 is provided with a plurality of axial grooves or slots 10 parallel to the axis 2 and circumferentially spaced one from the other. Each groove 10 houses a stator bar 11 (defining electrical windings) in a groove recessed position with respect to the inner surface 9. As known, each bar 11 is kept in position by a wedge system 12.

Reference is now made to figures 3 that is a schematic enlarged view of the portion labeled as III in figure 2. In particular, figure 3 discloses a groove 10 housing in a recessed position the relative bar 11. The rotor 6 is only partially represented. According to this embodiment, the wedge system comprises a lower wedge 14 in contact with an upper wedge 15. Please be notice that the term "upper" and "lower" inner refers to the bar, i.e. the inner wedge is the wedge acting on the bar whereas the upper wedge is the wedge facing the airgap between statoric and rotating part of the generator. With respect to the axis 2, the lower wedge 14 may be defined as the outer wedge and the upper wedge 15 as the inner wedge. The lower wedge 14 is configured to apply a pressure on the bar 11. As a reaction the same pressure is also applied the upper wedge 15. Consequently, due to this pressure the upper surface 16 of the upper wedge 15 deforms from the starting flat or straight configuration and discloses a curved shape as schematically represented in figure 3 in dash line. It is important to periodically inspect the wedge surface in order to check the presence of this deflection. This deflection indeed is an indirect confirmation that a correct pressure is applied to the bar 11 inside the groove 10. As discloses, the upper wedge 15 is on both edges laterally constrained in the groove 10 along its entire axial length. In figure 3 the reference 17 refers to the distance between the inner statoric surface 9 and the recessed wedge surface 16 to be inspected (i.e. the radial distance between the inner statoric surface 9 and the upper wedge 15). The reference 18 refers to the circumferential length of the groove 10. The wedge represented in figure 3 may be called as "convex/concave" wedge due to the disclosed curve deformation. However, as stated in the general description of the present invention, the invention refers also to flat wedge, i.e. a wedge disclosing a flat surface also during the generator operation.

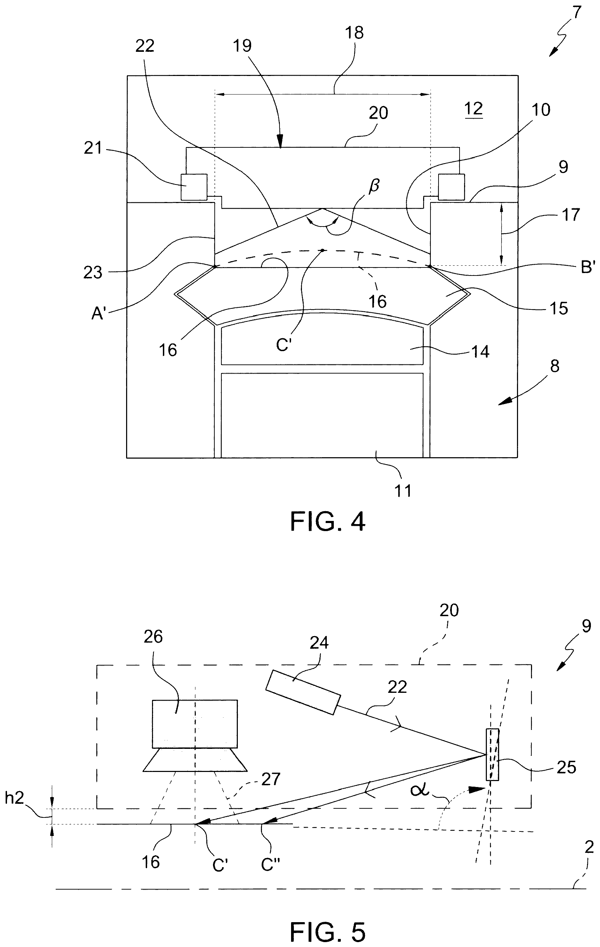

Reference is now made to figure 4 that discloses the groove 10 housing the bar 11 of figure 3 wherein a inspecting device 19 according to the invention is arranged in the airgap 12 on the inner statoric surface 9 facing the upper wedge 15 for inspecting (measuring the shape of) the upper wedge surface 16. As disclosed in figure 4 the device 19 comprises a frame 20 acting as a bridge above the groove 10 on the inner statoric surface 9. According to the invention the inspecting device 19 does not touch the wedge surface 16 to be inspected and comprises wheels for running on the surface 9 along the generator axis 2. Preferably, the coupling between the wheels or tracks 21 and the surface 16 is a magnetic coupling in order to guarantee an optimal adhesion independently on the circumferential position of the groove 10 about the generator axis 2. According to the invention, the frame 20 supports a contactless sensor device in order to measure the deflection of the upper wedge surface 16 without requiring any physical contact between the surface 16 and the sensor. In particular, according to the embodiment of figure 4, the contactless sensor device comprises a laser emitter (not represented in figure 4) configured for emitting a laser beam 22 directed against the wedge surface 16 to be measured. As disclosed in figure 4, preferably the laser beam 22 is configured to have a circumferential width so that not only the entire circumferential extent of the surface 16 is illumined but also at least a portion of the vertical wall 23 defining the partitions between adjacent groove 10. Due to this "large" angled laser beam, the entire surface 16 is illumined also in case of misalignment of the device 19 along the axial extent of the groove 10. Finally the reference A', C' and B' refers to some measuring points of the laser beam 22 on the surface 16. In particular the raised point C' is located in the middle of the raised surface 16 (in saddle line) whereas the points A and B are the lateral points wherein the laser beam 22 impact with the edge between the raised surface 16 and the vertical walls 23. As stated in the general description of the present invention, the frame may disclose also alternative shape. For instance (embodiment not represented in the enclosed drawings) the frame may comprises a first portion arranged on a first axial groove and a second portion in a cantilever condition above the adjacent groove. In this configuration, the first portion of the frame is provided with wheels or tracks suitable for allowing the movement of the device whereas the second portion of the frame is provided with the sensor device for inspecting the wedge arranged in the adjacent groove. Advantageously, according to this embodiment it is possible to moreover reduce the radial high of the frame.

Reference is now made to figure 5 that discloses some additional elements of the contactless sensor device supported by the frame 20. According to figure 5 the contactless sensor device comprises the foregoing mentioned laser emitter 24 wherein this laser emitter 24 is arranged angled (preferably almost parallel) to the surface 16 or in any case is configured for emitting angled laser beam 22. The angled laser beam 22 emitted by the laser emitter 24 is not directed against the surface but against a mirror 25 configured for reflecting and directing the laser beam 22 against the surface 16. The contactless sensor device moreover comprises an image sensing source 26 configured for receiving the laser beam 22 reflected from the wedge surface 19 to be measured.

Since the image sensing source 26 comprises a limited sensing zone 27, the mirror 25 can be tilted so that the impact point of the laser against the surface 16 falls inside this sensing zone 27. In view of the above, by varying the angle of the mirror 25 it is possible to use the device of the present invention also in generators having different wedge recessed distance 17.

Again, with reference to figure 5, there must be a relation between the dimension h2 (distance between the container 20 and the wedge) and the angle α between the mirror and the plane, ordinarily horizontal, in which the wedge lies, of which to measure the eventual inflection.

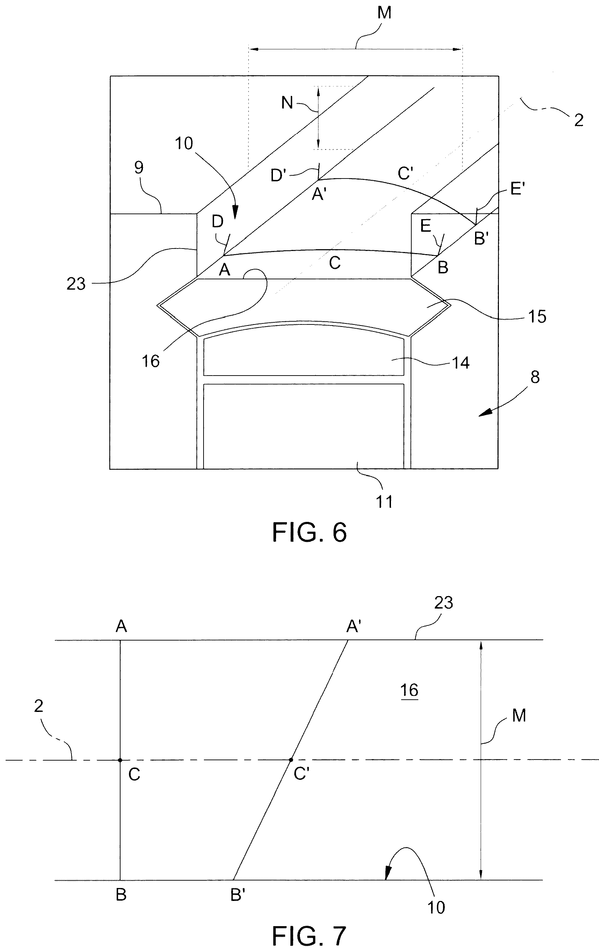

The aforementioned relationship between the height h2 and the angle α must be such that the projection of the laser beam on the plane of which we want to measure the eventual inflection, both in the case give rise to points A, B and C, in case of non-inflected wedge, and in the case of give rise to points A', B' and C', in case of an inflected wedge (see figure 6), fall within the wedge portion framed by the image sensing source 26; for this purpose, with reference to figure 5, the image sensing source 26 must be focused even considering that the wedge is at a distance h2 from the container 20.

The inspecting device described above must prevent the situation disclosed in figure 5 from being created, wherein the point C" falls outside the field of view of the image sensing source 26.

To avoid that the laser blade is out of the wedge portion framed by the image sensing source 26, it is necessary to act according to one of the following options:
- remove the container from the wedge until the height is returned to the nominal value h2 (adjusting the focus) ;
- implementing a modification of the angle ex, in order to bring C" to the field framed by the image sensing source 26.

With reference to figure 4, the robotic vehicle, moving in the air gap along the slots, in magnetic adhesion to the statoric pack, can "locally jump/misalign" on drops of resin and various imperfections; this determines misalignments of the A'C'B' curve (or of the ACB line in case of a flat surface 16), which, through the proposed invention, are suitably identified without this leading to the impossibility of calculating the deflection in such conditions. For this purpose, it is provided that the laser blade also illuminates part of the side or vertical walls 23 of the groove (hence not only the external horizontal surface of the wedge of width M as disclosed in figures 6 and 7) . The reference D or D' and E or E' refer to the end points of the laser beam 22 impacting against the vertical walls 23. For this purpose the laser beam 22 discloses a wide opening angle β as shown in figure 4.

In this way, the cups of the laser blade at the discontinuity between the ordinarily flat surface of the wedge and the ordinarily vertical surface of the slots (height N in figure 6) provide an indication of how the vehicle is actually oriented and, therefore, also the laser blade (figure 6 and figure 7). As a last resort, said ordinarily vertical surfaces make possible the measurement of inflection even if the laser illuminator was not exactly in the middle of the wedge (wit reference to figure 6 AD>BE), or if there were small angular misalignments with respect to the advancement motion of the assumed co-linear robotic vehicle at the centerline of the slot (with reference to figure 7 the line AB is not parallel to the line A'B') and with constant height equal to h2 [distance between the viewing module container (laser + micro-camera + optic) and the external horizontal surface of the wedge].

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Generator with an inspecting device for inspecting a wedge surface (16) of a wedge (15) for fixing a stator bar (11) of the generator (7), in particular for measuring the deflection of the wedge surface (16); wherein the generator has an axis (2) and comprises an inner rotor (6) and an outer stator (8) provided with a plurality of axial grooves (10) for housing in a recessed position stator bars (11) kept in position by wedges (15), an airgap (12) being present between the inner rotor (6) and the outer stator (8); the inspecting device comprises a vehicle (19) having a size suitable for being inserted in the generator air gap (12) in presence of the rotor (6) and for axially running along the rotor axis (2) facing the wedge surface (16) to be measured;
the vehicle (19) being provided with a contactless sensor device configured for inspecting the wedge surface;
wherein the contactless sensor device supported by the vehicle (19) comprises:
- a laser emitter (24) configured for projecting an angled laser beam (22) with resect to the wedge surface (16) to be measured;
- an image sensing source (26) configured for receiving the laser beam (22) reflected from the wedge surface (16) to be measured;
**characterized in that** the laser emitter (24) is configured for emitting a laser beam (22) having a circumferential size so that it illuminates not only the wedge surface (16) but also at least a portion of the lateral wall of the groove (10) housing the wedge (11).

2. Generator with an inspecting device as claimed in claim 1, wherein the contactless sensor device is configured for measuring the wedge surface deflection.

3. Generator with an inspecting device as claimed in claim 1 or 2, wherein the vehicle (19) comprises a frame (20) supporting the contactless sensor device and wheels or tracks (21) suitable for allowing the movement of the device (19) on an inner surface (9) of the generator stator (8) along the generator axis (2) facing at least the wedge surface (16) to be inspected.

4. Generator with an inspecting device as claimed in claim 3, wherein frame (20) comprises a first portion arranged on a axial groove (10) and a second portion in a cantilever condition above the adjacent groove, the first portion being provided with the wheels or tracks (21) suitable for allowing the movement of the device (19) whereas the second portion is provided with contactless sensor device for inspecting the wedge arranged in the adjacent groove.

5. Generator with an inspecting device as claimed in claim 3 or 4, wherein the coupling between the wheels or tracks (21) and the inner surface (9) of the generator stator (8) is a magnetic coupling.

6. Generator with an inspecting device as claimed in claim 1, wherein the contactless sensor device supported by the vehicle (19) comprises a mirror suitable for reflecting and directing the laser beam against the wedge surface to be measured.

7. Generator with an inspecting device as claimed in claim 6, wherein the mirror (25) is arranged along a plurality of angled position with respect to the wedge surface (16) to be measured.

8. Generator with an inspecting device as claimed in any one of the foregoing claims, wherein device comprises a second laser emitter configured for emitting a laser beam along the axial direction of the wedge.

9. A method for inspecting a wedge surface (16) of a wedge (15) for fixing a stator bar (11) of a generator (7), in particular for measuring the deflection of a wedge surface (16); the method comprising the steps of:
a) providing a generator (7) having an axis (2) and comprising an inner rotor (6) and an outer stator (8) provided with a plurality of axial grooves (10) for housing in a recessed position stator bars (11) kept in position by wedges (15), an airgap (12) being present between the inner rotor (6) and the outer stator (8);
b) providing a inspecting device (19) in combination with the generator (7) as claimed in any one of the foregoing claims;
c) inserting the inspecting device (19) in the generator airgap (12) so that the inspecting device (19) is facing the wedge surface (16) to be measured;
d) moving the inspecting device (19) along the generator axis (2);
e) measuring the deflection of the wedge surface (16) by means of the contactless sensor during the movement of the inspecting device (19).

10. Method as claimed in claim 9 when dependent on claim 6, wherein the method comprises also the step of adjusting the angled position of the mirror (25) depending on the recessed distance (23) between the inspecting device (19) and the wedge surface (16) to be measured.

11. Method as claimed in claim 9 or 10, wherein the method comprises a preliminary step of providing the device with original shape information of the wedge to be inspected and an additional step of comparing the original shape information with the shape information of the wedge derived from the inspection.

## Patentansprüche

1. Generator mit einer Prüfvorrichtung zum Prüfen einer Keiloberfläche (16) eines zum Fixieren einer Statorleiste (11) des Generators (7) dienenden Keils (15), insbesondere zum Messen der Abweichung der Keiloberfläche (16); wobei der Generator eine Achse (2) hat und einen inneren Rotor (6) und einen äußeren Stator (8) umfasst, der mit einer Mehrzahl axialer Nuten (10) zum Unterbringen von Statorleisten (11) in einer vertieften Position ausgestattet ist, die durch Keile (15) in Position gehalten werden, wobei ein Luftspalt (12) zwischen dem inneren Rotor (6) und dem äußeren Stator (8) vorhanden ist; die Prüfvorrichtung ein Vehikel (19) umfasst, das eine Größe hat, die dazu geeignet ist, in Anwesenheit des Rotors (6) in den Generator-Luftspalt (12) eingeführt zu werden und axial entlang der Rotorachse (2) zu der zu messenden Keiloberfläche (16) weisend zu laufen; wobei das Vehikel (19) mit einer kontaktfreien Sensorvorrichtung ausgestattet ist, die zum Prüfen der Keiloberfläche ausgelegt ist;
wobei die von dem Vehikel (19) getragene kontaktfreie Sensorvorrichtung umfasst:
- einen Laseremitter (24), der zum Projizieren eines abgewinkelten Laserstrahls (22) bezüglich der zu messenden Keiloberfläche (16) ausgelegt ist;
- eine Bilderfassungsquelle (26), die zum Empfangen des von der zu messenden Keiloberfläche (16) reflektierten Laserstrahls (22) ausgelegt ist;
**dadurch gekennzeichnet, dass** der Laseremitter (24) dazu ausgelegt ist, einen Laserstrahl (22) zu emittieren, der eine Umfangsabmessung derart hat, dass er nicht nur die Keiloberfläche (16), sondern auch mindestens einen Teil der Seitenwand der Nut (10), in der der Keil (11) untergebracht ist, beleuchtet.

2. Generator mit einer Prüfvorrichtung gemäß Anspruch 1, wobei die kontaktfreie Sensorvorrichtung zum Messen der Keiloberflächenabweichung ausgelegt ist.

3. Generator mit einer Prüfvorrichtung gemäß Anspruch 1 oder 2, wobei das Vehikel (19) einen Rahmen (20), der die kontaktfreie Sensorvorrichtung trägt, und Räder oder Ketten (21) umfasst, die dazu geeignet sind, eine Bewegung der Vorrichtung (19) auf einer Innenfläche (9) des Generatorstators (8) entlang der Generatorachse (2) mindestens zu der zu prüfenden Keiloberfläche (16) hin weisend zu erlauben.

4. Generator mit einer Prüfvorrichtung gemäß Anspruch 3, wobei der Rahmen (20) einen ersten Teil, der auf einer axialen Nut (10) angeordnet ist, und einen zweiten Teil in einer Tragarmsituation über der benachbarten Nut umfasst, wobei der erste Teil mit den Rädern oder Ketten (21) ausgestattet ist, die zum Erlauben einer Bewegung der Vorrichtung (19) geeignet sind, während der zweite Teil mit einer kontaktlosen Sensorvorrichtung zum Prüfen des in der benachbarten Nut angeordneten Keils ausgestattet ist.

5. Generator mit einer Prüfvorrichtung gemäß Anspruch 3 oder 4, wobei die Kopplung zwischen den Rädern oder Ketten (21) und der Innenfläche (9) des Generatorstators (8) eine magnetische Kopplung ist.

6. Generator mit einer Prüfvorrichtung gemäß Anspruch 1, wobei die kontaktfreie Sensorvorrichtung, die von dem Vehikel (19) getragen wird, einen Spiegel umfasst, der zum Reflektieren und Richten des Laserstrahls gegen die zu messende Keiloberfläche geeignet ist.

7. Generator mit einer Prüfvorrichtung gemäß Anspruch 6, wobei der Spiegel (25) entlang einer Mehrzahl angewinkelter Positionen bezüglich der zu messenden Keiloberfläche (16) angeordnet ist.

8. Generator mit einer Prüfvorrichtung gemäß einem der vorhergehenden Ansprüche, wobei die Vorrichtung einen zweiten Laseremitter umfasst, der zum Emittieren eines Laserstrahls entlang der axialen Richtung des Keils ausgelegt ist.

9. Verfahren zum Prüfen einer Keiloberfläche (16) eines Keils (15) zum Fixieren einer Statorleiste (11) eines Generators (7), insbesondere zum Messen einer Abweichung einer Keiloberfläche (16); wobei das Verfahren die folgenden Schritte umfasst:
a) Vorsehen eines Generators (7), der eine Achse (2) hat und einen inneren Rotor (6) und einen äußeren Stator (8) umfasst, der mit einer Mehrzahl axialer Nuten (10) zum Unterbringen von Statorleisten (11) in einer vertieften Position ausgestattet ist, die durch Keile (15) in Position gehalten werden, wobei ein Luftspalt (12) zwischen dem inneren Rotor (6) und dem äußeren Stator (8) vorhanden ist;
b) Vorsehen einer Prüfvorrichtung (19) in Kombination mit dem Generator (7) gemäß einem der vorhergehenden Ansprüche;
c) Einführen der Prüfvorrichtung (19) in den Generatorluftspalt (12), sodass die Prüfvorrichtung (19) zu der zu messenden Keiloberfläche (16) hin weist;
d) Bewegen der Prüfvorrichtung (19) entlang der Generatorachse (2);
e) Messen der Abweichung der Keiloberfläche (16) mittels des kontaktfreien Sensors während der Bewegung der Prüfvorrichtung (19).

10. Verfahren gemäß Anspruch 9, wenn abhängig von Anspruch 6, wobei das Verfahren auch den Schritt des Einstellens der Winkelposition des Spiegels (25) in Abhängigkeit von dem vertieften Abstand (23) zwischen der Prüfvorrichtung (19) und der zu messenden Keiloberfläche (16) umfasst.

11. Verfahren gemäß Anspruch 9 oder 10, wobei das Verfahren einen vorangehenden Schritt zum Versehen der Vorrichtung mit Original-Form-Informationen des zu prüfenden Keils und einen zusätzlichen Schritt zum Vergleichen der Original-Form-Informationen mit den aus der Prüfung erhaltenen Forminformationen des Keils umfasst.

## Revendications

1. Générateur avec un dispositif d'inspection pour inspecter une surface de calage (16) d'une cale (15) pour fixer une barre de stator (11) du générateur (7), en particulier pour mesurer la déviation de la surface de calage (16) ; dans lequel le générateur a un axe (2) et comprend un rotor interne (6) et un stator externe (8) pourvu d'une pluralité de rainures axiales (10) pour loger dans une position en retrait des barres de stator (11) maintenues en position par des cales (15), un entrefer (12) étant présent entre le rotor interne (6) et le stator externe (8) ; le dispositif d'inspection comprend un véhicule (19) ayant une taille adaptée pour être inséré dans l'entrefer (12) du générateur en présence du rotor (6) et pour se déplacer axialement le long de l'axe du rotor (2) face à la surface de calage (16) à mesurer ; le véhicule (19) étant équipé d'un dispositif de détection sans contact configuré pour inspecter la surface de calage ; dans lequel le dispositif de détection sans contact supporté par le véhicule (19) comprend :
- un émetteur laser (24) configuré pour projeter un faisceau laser incliné (22) par rapport à la surface de calage (16) à mesurer ;
- une source de détection d'image (26) configurée pour recevoir le faisceau laser (22) réfléchi par la surface de calage (16) à mesurer ;
**caractérisé en ce que** l'émetteur laser (24) est configuré pour émettre un faisceau laser (22) ayant une taille circonférentielle telle qu'il éclaire non seulement la surface de calage (16), mais aussi au moins une partie de la paroi latérale de la rainure (10) abritant la cale (11).

2. Générateur avec dispositif d'inspection selon la revendication 1, dans lequel le dispositif de détection sans contact est configuré pour mesurer la déviation de la surface de calage.

3. Générateur avec dispositif d'inspection selon la revendication 1 ou 2, dans lequel le véhicule (19) comprend un cadre (20) supportant le dispositif de détection sans contact et des roues ou des chenilles (21) permettant le déplacement du dispositif (19) sur une surface intérieure (9) du stator du générateur (8) le long de l'axe du générateur (2) en regard d'au moins la surface de calage (16) à inspecter.

4. Générateur avec dispositif d'inspection selon la revendication 3, dans lequel le cadre (20) comprend une première partie disposée sur une rainure axiale (10) et une seconde partie en porte-à-faux au-dessus de la rainure adjacente, la première partie étant pourvue de roues ou de chenilles (21) permettant le déplacement du dispositif (19) tandis que la seconde partie est pourvue d'un dispositif de détection sans contact pour inspecter la cale disposée dans la rainure adjacente.

5. Générateur avec dispositif d'inspection selon la revendication 3 ou 4, dans lequel l'accouplement entre les roues ou les chenilles (21) et la surface intérieure (9) du stator du générateur (8) est un accouplement magnétique.

6. Générateur avec dispositif d'inspection selon la revendication 1, dans lequel le dispositif de détection sans contact supporté par le véhicule (19) comprend un miroir adapté pour réfléchir et diriger le faisceau laser contre la surface de calage à mesurer.

7. Générateur avec dispositif d'inspection selon la revendication 6, dans lequel le miroir (25) est disposé selon une pluralité de positions angulaires par rapport à la surface de calage (16) à mesurer.

8. Générateur avec dispositif d'inspection selon l'une quelconque des revendications précédentes, dans lequel le dispositif comprend un second émetteur laser configuré pour émettre un faisceau laser le long de la direction axiale de la cale.

9. Procédé d'inspection d'une surface de calage (16) d'une cale (15) pour la fixation d'une barre de stator (11) d'un générateur (7), en particulier pour mesurer la déviation d'une surface de calage (16) ; le procédé comprend les étapes suivantes :
a) fournir un générateur (7) ayant un axe (2) et comprenant un rotor interne (6) et un stator externe (8) pourvu d'une pluralité de rainures axiales (10) pour loger dans une position en retrait des barres de stator (11) maintenues en position par des cales (15), un entrefer (12) étant présent entre le rotor interne (6) et le stator externe (8) ;
b) fournir un dispositif d'inspection (19) en combinaison avec le générateur (7) tel que revendiqué dans l'une quelconque des revendications précédentes ;
c) insérer le dispositif d'inspection (19) dans l'entrefer du générateur (12) de manière à ce que le dispositif d'inspection (19) soit orienté vers la surface de calage (16) à mesurer ;
d) déplacer le dispositif d'inspection (19) le long de l'axe du générateur (2) ;
e) mesurer la déviation de la surface de calage (16) au moyen du capteur sans contact pendant le mouvement du dispositif d'inspection (19).

10. Procédé selon la revendication 9 lorsqu'elle dépend de la revendication 6, dans lequel le procédé comprend également l'étape consistant à ajuster la position angulaire du miroir (25) en fonction de la distance en retrait (23) entre le dispositif d'inspection (19) et la surface de calage (16) à mesurer.

11. Procédé selon la revendication 9 ou 10, dans lequel le procédé comprend une étape préliminaire consistant à fournir au dispositif des informations sur la forme d'origine de la cale à inspecter et une étape supplémentaire consistant à comparer les informations sur la forme d'origine avec les informations sur la forme de la cale dérivées de l'inspection.
